# EUROPEAN PATENT APPLICATION

(11) **EP 4 841 603 A1**
(43) Date of publication of application: **18.11.2026**
(21) Application number: 26174712.5
(22) Date of filing: 27.04.2026
(51) Int. Cl.: G08B 25/14, G08B 13/196, G08B 29/18

(54) **SYSTEMS AND METHODS FOR IMPROVING DETECTION OF ALARM CONDITIONS BY A SURVEILLANCE SYSTEM**

(30) Priority: 15.05.2025 US 202519209311
(71) Applicant: Honeywell International Inc., Charlotte, NC 28202 (US)
(72) Inventor: SOMASUNDARAM, Poothabalan, Charlotte, 28202 (US); B, Aditya Shyam, Charlotte, 28202 (US); RAMGOPAL, Nithin Yadalla, Charlotte, 28202 (US)
(74) Representative: Haseltine Lake Kempner LLP

(57) **Abstract**

A system and method for improving surveillance system alarm detection across multiple remote sites using cloud-based machine learning. A cloud server connects to multiple remote sites, each having a surveillance system with video cameras and configuration settings including video analytics. Controllers at each site learn improved settings over time to enhance alarm detection accuracy. The cloud server aggregates these learned settings from multiple sites to generate optimized configuration settings, which it then distributes to the remote sites. The system supports various video analytics algorithms for detection of motion, faces, crowds, behaviors and objects. Camera settings like resolution, frame rate and bitrate can be adjusted. Facility managers can approve configuration changes before implementation. The system enables continuous improvement of surveillance capabilities through collaborative learning across the network of sites.

## Description

### TECHNICAL FIELD

The present disclosure pertains to surveillance systems and more particularly to efficiently configuring a surveillance system of a facility for improved detection of alarm conditions at the facility.

### BACKGROUND

Surveillance systems are employed in a variety of different types of facilities. Different types of facilities can have significantly different security concerns. For example, a school will have substantially different security concerns than a hospital. More generally, schools, hospitals, retail stores, warehouses, datacenters and other types of facilities will each have different security concerns. Because of this variation, a generalized approach for configuring of surveillance systems may not be suitable. A customized approach can be expensive, time consuming and error prone. What would be desirable are systems and methods for efficiently configuring a surveillance system.

### SUMMARY

The present disclosure pertains to surveillance systems and more particularly to efficiently configuring and/or tuning configuration settings of a surveillance system of a facility for improved detection of alarm conditions at the facility. In some cases, a cloud server connects to multiple remote sites, each having a surveillance system with video cameras and configuration settings including video analytics. Controllers at each site learn improved settings over time to enhance alarm detection accuracy. The cloud server aggregates these learned settings from multiple sites to generate optimized configuration settings, which it then distributes to the remote sites. The system enables continuous improvement of surveillance capabilities through collaborative learning across the network of sites.

An illustrative system includes a cloud server and a plurality of remote sites that are each operatively coupled to the cloud server. Each of the plurality of remote sites includes a surveillance system having a plurality of video cameras. Each of the surveillance systems include a plurality of configuration settings that configure the surveillance system to detect alarm conditions at the respective remote site, wherein the plurality of configuration settings include one or more video analytics configuration settings. Each of the surveillance systems include one or more controllers that are configured to learn over time improved configuration settings for the surveillance system that improve detection of alarm conditions at the respective remote site. The cloud server is configured to receive the improved configuration settings from each of the plurality of remote sites. The cloud server is configured to generate a learned set of configuration settings based at least in part on the improved configuration settings received from each of two or more of the plurality of remote sites. The cloud server is configured to provide the learned set of configuration settings to each of one or more of the plurality of remote sites to configure the surveillance system at each of the one or more remote sites to improve detection of alarm conditions at each of the one or more remote sites. Configuring the surveillance system can include initially configuring the surveillance system and/or tuning existing configuration settings of the surveillance system to improve detection of alarm conditions at the respective remote site.

Another example may be found in a method for improving detection of alarm conditions by a surveillance system of a facility at a designated remote site. The surveillance system at the designated remote site includes a plurality of configuration settings. The method includes each of a plurality of remote sites learning over time improved configuration settings that improve detection of alarm conditions by the surveillance system at the respective remote site. A cloud server receives the improved configuration settings from each of the plurality of remote sites. The cloud server generates a learned set of configuration settings based at least in part on the improved configuration settings received from each of the plurality of remote sites. The cloud server updates the plurality of configuration settings of the surveillance system of the designated remote site with one or more of configuration settings of the learned set of configuration settings, resulting in updated (e.g. tuned) configuration settings. The surveillance system of the designated remote site detects alarm conditions using the updated configuration settings.

Another example may be found in a non-transitory computer readable medium storing instructions. When the instructions are executed by one or more processors, the one or more processors to are caused to learn over time improved configuration settings (e.g. tuned) for surveillance systems at each of a plurality of remote sites that improve detection of alarm conditions by the surveillance system at the respective remote site. The one or more processors are caused to receive the improved configuration settings from each of the plurality of remote sites. The one or more processors are caused to generate a learned set of configuration settings based at least in part on the improved configuration settings received from each of the plurality of remote sites. The one or more processors are caused to update the one or more configuration settings of the surveillance systems at each of the plurality of remote sites with one or more of configuration settings of the learned set of configuration settings, resulting in respective updated configuration settings. The one or more processors are caused to detect alarm conditions via the surveillance system at each of the remote sites using the respective updated configuration settings.

The preceding summary is provided to facilitate an understanding of some of the features of the present disclosure and is not intended to be a full description. A full appreciation of the disclosure can be gained by taking the entire specification, claims, drawings, and abstract as a whole.

### BRIEF DESCRIPTION OF THE DRAWINGS

The disclosure may be more completely understood in consideration of the following description of various illustrative embodiments of the disclosure in connection with the accompanying drawings, in which:
Figure 1 is a schematic block diagram showing an illustrative system;
Figure 2 is a schematic block diagram showing an illustrative system;
Figures 3A and 3B are flow diagrams that together show an illustrative method for improving detection of alarm conditions; and
Figures 4A and 4B are flow diagrams that together show an illustrative series of steps that may be carried out by one or more processors that are executing executable instructions stored on a non-transient, computer-readable storage medium.

While the disclosure is amenable to various modifications and alternative forms, specifics thereof have been shown by way of example in the drawings and will be described in detail. It should be understood, however, that the intention is not to limit aspects of the disclosure to the particular illustrative embodiments described. On the contrary, the intention is to cover all modifications, equivalents, and alternatives falling within the spirit and scope of the disclosure.

### DESCRIPTION

The following description should be read with reference to the drawings wherein like reference numerals indicate like elements. The drawings, which are not necessarily to scale, are not intended to limit the scope of the disclosure. In some of the figures, elements not believed necessary to an understanding of relationships among illustrated components may have been omitted for clarity.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

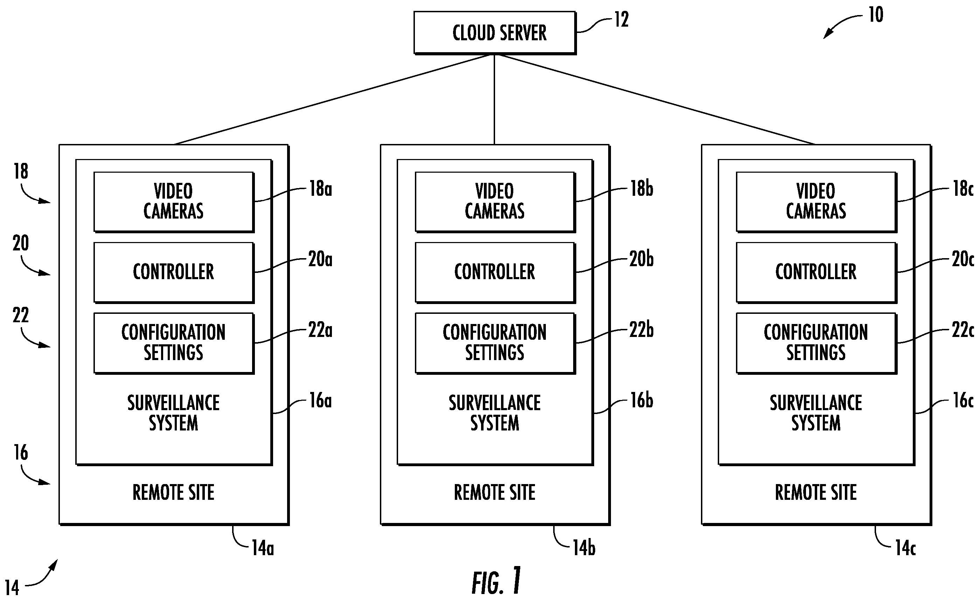

Figure 1 is a schematic block diagram showing an illustrative system 10. The illustrative system 10 includes a cloud server 12 and a plurality of remote sites 14, individually labeled as 14a, 14b, and 14c, that are each operatively coupled to the cloud server 12. Each of the remote sites 14 include a surveillance system 16, individually labeled as 16a, 16b, and 16c. Each of the surveillance systems 16 include video cameras 18, individually labeled as 18a, 18b, and 18c. Each of the surveillance systems 16 include a controller 20, individually labeled as 20a, 20b, and 20c. Each of the surveillance systems 16 include configuration settings 22, individually labeled as 22a, 22b, and 22c. The configuration settings 22 configure each surveillance system 16 to detect alarm conditions at the respective remote site 14, wherein configuration settings 22 may include one or more video analytics configuration settings. Over time, each of the controllers 20 are configured to learn improved configuration settings 22 improved configuration settings for the surveillance system 16 that improve detection of alarm conditions at the respective remote site 14. In some cases, the plurality of configuration settings 22 may be configured to identify one or more camera settings for one or more of the plurality of video cameras 18 of the respective surveillance system 16. As an example, the one or more camera settings may include one or more of a video camera resolution, a video camera frame rate, a video camera bitrate and one or more video analytics algorithms.

The cloud server 12 is configured to receive the improved configuration settings 22 from each of the plurality of remote sites 14. The cloud server 12 is configured to generate a learned set of configuration settings 22 that are based at least in part on the improved configuration settings 22 received from each of two or more of the plurality of remote sites 14. The cloud server 12 is configured to provide the learned set of configuration settings 22 to each of one or more of the plurality of remote sites 14 to configure the surveillance system 16 at each of the one or more remote sites 14 to improve detection of alarm conditions at each of the one or more remote sites 14. In some cases, the learned set of configuration settings 22 may be provided as one or more options to a respective facility manager of each of the one or more of the remote sites 14 for approval, and wherein only those options that are approved by the respective facility manager are implemented at the respective remote site 14. As an example, the one or more options may include one or more recommended configuration setting changes to help improve detection of alarm conditions at the respective remote site 14.

In some cases, each of the plurality of remote sites 14 may be classified in a common remote site category of a plurality of remote site categories, and the plurality of configuration settings 22 that configure the surveillance system of each of the plurality of remote sites 14 may be customized to the respective remote site category. As an example, the plurality of remote site categories may include one or more of a school category, a retail business category, a warehouse category a datacenter category and a commercial outlet category. These are just examples.

In some cases, the cloud server 12 may be configured to identify the remote site category of each of the plurality of remote sites 14 based on input data received from an installer of the surveillance system 16 of each of the plurality of remote sites 14. The cloud server 12 may be configured to customize one or more configuration settings 22 of the surveillance systems 16 of the plurality of remote sites 14 based on the respective remote site category. As an example, the plurality of configuration settings 22 may identify one or more video analytics algorithms to run on a video stream produced by one or more of the plurality of video cameras 18 of the surveillance system 16 of the respective remote site 14. In some cases, each of the one or more video analytics algorithms may be configured to perform one or more of motion detection, facial recognition, crowd detection, riot detection, running detection, loitering detection, fighting detection, behavior detection, and unattended object detection. These are just examples.

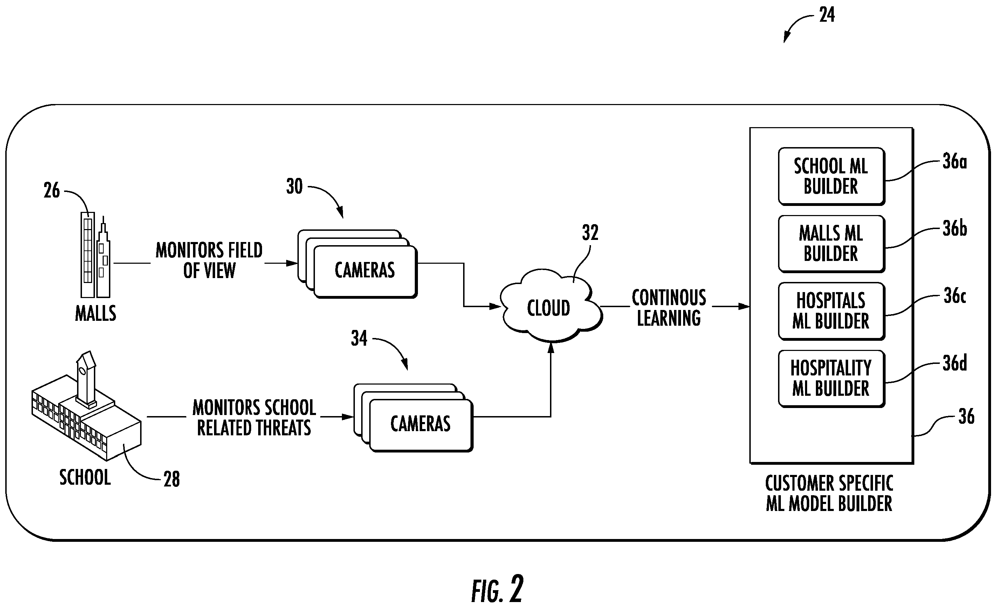

Figure 2 is a schematic block diagram showing an illustrative system 24. The illustrative system 24 may be considered as being an example of the system 10. The system 24 shows how data is collected from a variety of different categories of facilities and used to build category specific machine learning models that are ultimately applied to each of the different categories of facilities. The illustrative system 24 includes a mall 26 and a school 28. The mall 26 include a plurality of cameras 30 that monitor fields of view within the mall 26. The outputs from the cameras 30 are provided to a cloud server 32. The school 28 includes a plurality of cameras 34 that monitor school-related events. The outputs from the cameras 34 are provided to the cloud server 32. The cloud server 32 may determine which machine learning model 36 may be best for a corresponding facility. For example, the machine learning (ML) models 36 may include a school ML builder 36a, a malls ML builder 36b, a hospitals ML builder 36c, and a hospitality ML builder 36d. These are just examples.

The following provides an example for a school facility:
Data Input: When a new school facility is onboarded, the following details are collected:
a. Latitude and Longitude: Geographic coordinates of the school.
b. Year: The year the data is being collected or the school was established.
c. School Name: The name of the school.
d. County, City, State, Address: Location details of the school.
e. Urban or Rural: Classification of the school's location.
f. Race: The largest racial demographic among the student body.
g. Severity: Historical data on incidents, considering victims, killed, and injured.
The collected data is fed into a pre-trained classification model 36a that is specifically trained for facilities that are classified as schools. Supervised learning techniques may be used to train each of the classification models 36 for each facility category using metrics like accuracy, precision, recall, and F1-score. The model processes the input data/features and identifies the desirability of, for example, changes to one or more configuration settings of one or more cameras 34 and/or other components of the surveillance system of the particular school 28. This can include the desirability of running one or more video analytics on the video stream produced by one or more of the cameras 24 of the particular school 28. This determination may be based on, for example, patterns learned from historical data of similar schools.

A recommendation engine may be provided that generates a list of recommended configuration setting changes and/or recommended additional offerings (additional hardware and/or software). The output of the recommendation engine is tailored to the specific needs of the particular school 28. The output of the recommendation engine may include, for example: recommended essential configuration settings; recommended basic video surveillance setup including camera placement at key locations such as entrances, hallways, and playgrounds of the particular school 28; recommended basic access control setup including recommended access control entry and exit points in the particular school 28; and recommended additional offerings such as adding additional hardware and/or software. For example, the recommended additional offerings may include adding an access control system, adding motion sensors at certain locations in the particular school, adding one or more higher-end video cameras at certain locations in the particular school, such as cameras with higher resolution, better night vision, built in motion detection and/or alert capabilities. The recommended additional offerings may include adding additional software capabilities such as deploying advanced video analytics in one or more of the cameras 34 of the particular school 28. The advanced video analytics may include, for example, video analytics to monitor and predict potentially dangerous behaviors, such as loitering or aggressive actions, and/or video analytics to perform facial recognition to identify unauthorized individuals. These are just examples.

Other facility categories may include, for example, retail business, warehouses and datacenters. The data collected when a new retail business is onboarded may include, for example, store size (square footage), location (latitude, longitude, urban or rural), foot traffic (average number of customers per day), inventory value, historical incidents (theft, vandalism), and business hours. The pre-trained classification model 36b for retail businesses may process the data input for the particular new retail business and identify the desirability of, for example, deploying additional video cameras and/or video analytics at certain locations within the particular new retail business. For other examples, the data collected when a new warehouse is onboarded may include, for example, warehouse size, location (Latitude, Longitude, Urban or Rural), type of goods stored, security incidents (past thefts, break-ins), number of employees, operating hours, and historical Incidents (theft, vandalism). The data collected when a new datacenter is onboarded may include, for example, data center size, location (latitude, longitude), type of data stored, security incidents (past breaches, unauthorized access), number of employee access control systems. These are just examples.

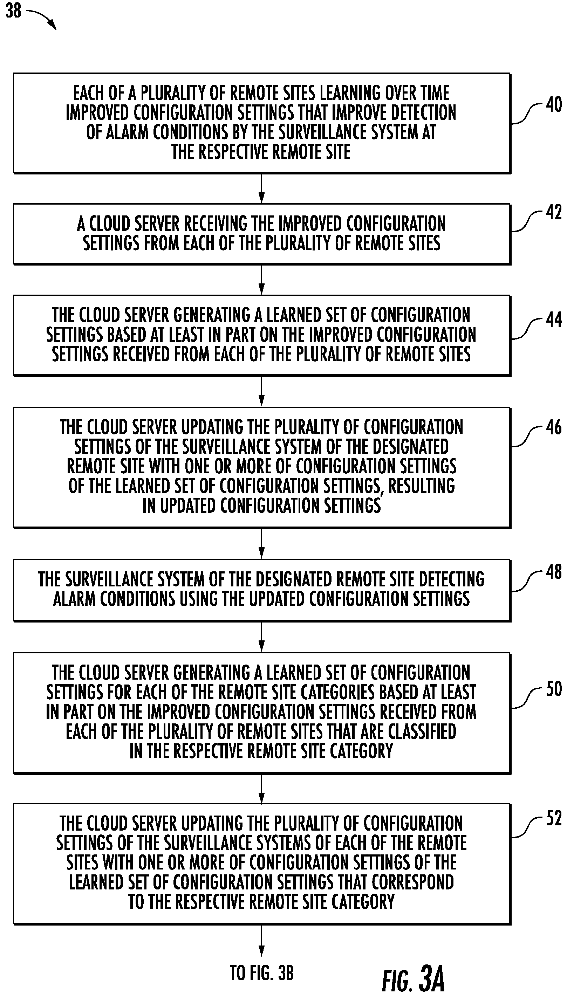

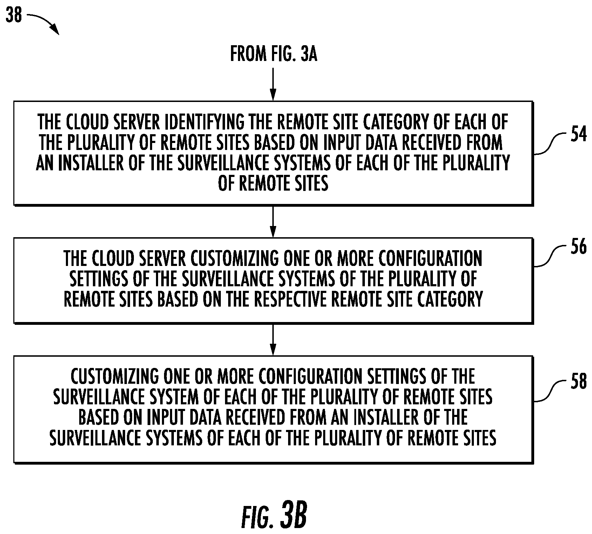

Figures 3A and 3B are flow diagrams that together show an illustrative method 38 for improving detection of alarm conditions by a surveillance system (such as the surveillance system 16) of a facility at a designated remote site (such as a remote site 140, the surveillance system at the designated remote site including a plurality of configuration settings (such as the configuration settings 22). The method 38 includes each of a plurality of remote sites learning over time improved configuration settings that improve detection of alarm conditions by the surveillance system at the respective remote site, as indicated at block 40. For example, security operators for a particular remote site may routinely dismiss certain alarms, indicating that such alarms are not important at the particular remote site. Alternatively, security operators may manually initiate alarms, indicating that the surveillance system missed certain alarm event. Such supervised learning techniques may be used to learn over time improved configuration settings for the surveillance system at the particular remote site.

A cloud server receives the improved configuration settings from each of the plurality of remote sites, as indicated at block 42. The cloud server generates a learned set of configuration settings based at least in part on the improved configuration settings received from each of the plurality of remote sites, as indicated at block 44. The cloud server updates the plurality of configuration settings of the surveillance system of the designated remote site with one or more of configuration settings of the learned set of configuration settings, resulting in updated configuration settings, as indicated at block 46. The surveillance system of the designated remote site detects alarm conditions using the updated configuration settings, as indicated at block 48.

In some cases, each of the plurality of remote sites may be classified into one of a plurality of remote site categories including the designated remote site, and the method 38 may further include the cloud server generating a learned set of configuration settings for each of the remote site categories based at least in part on the improved configuration settings received from each of the plurality of remote sites that are classified in the respective remote site category, as indicated at block 50. The cloud server may update the plurality of configuration settings of the surveillance systems of each of the remote sites with one or more of configuration settings of the learned set of configuration settings that correspond to the respective remote site category, as indicated at block 52. In some cases, the plurality of remote site categories may include one or more of a school category, a retail business category, a warehouse category a datacenter category and a commercial outlet category.

Continuing on Figure 3B, the method 38 may include the cloud server identifying the remote site category of each of the plurality of remote sites based on input data received from an installer of the surveillance systems of each of the plurality of remote sites, as indicated at block 54. In some cases, the cloud server customizes one or more configuration settings of the surveillance systems of the plurality of remote sites based on the respective remote site category, as indicated at block 56. In some cases, the method 38 may include customizing one or more configuration settings of the surveillance system of each of the plurality of remote sites based on input data received from an installer of the surveillance systems of each of the plurality of remote sites, as indicated at block 58. In some cases, the plurality of configuration settings may identify one or more video analytics algorithms to run on a video stream produced by one or more of a plurality of video cameras of the surveillance system of the respective remote site.

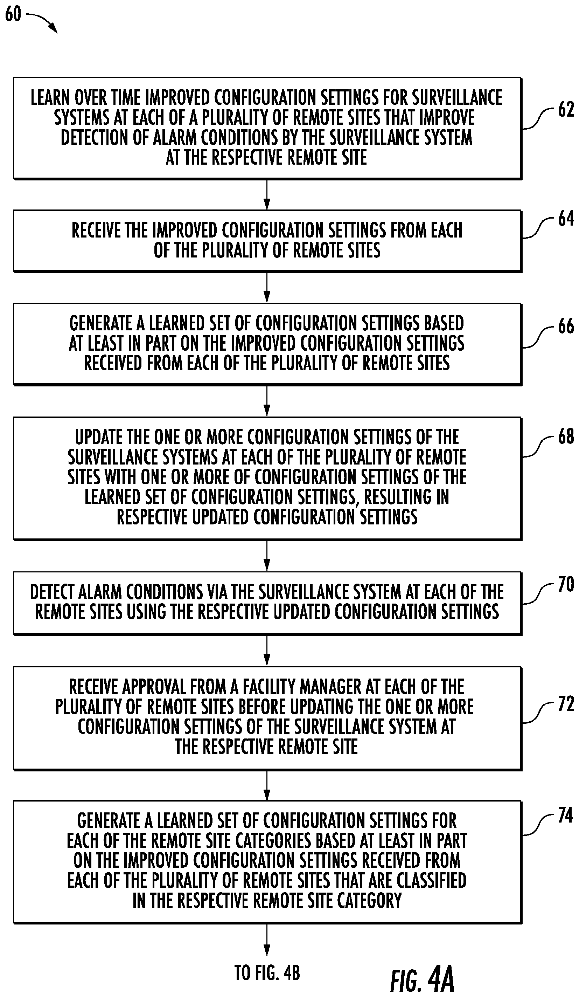

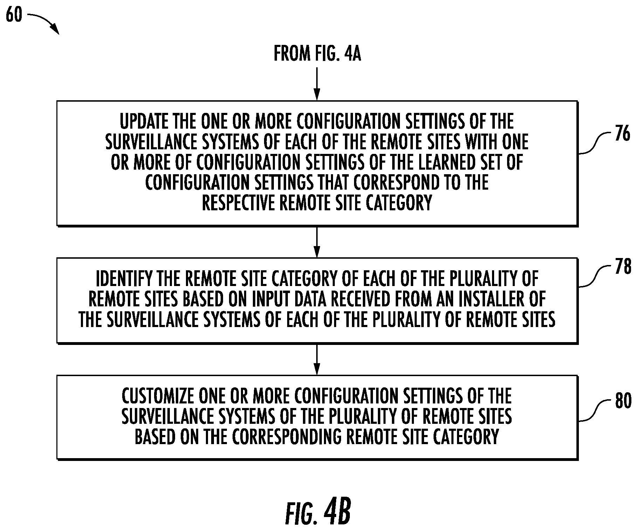

Figures 4A and 4B are flow diagrams that together show an illustrative series of steps 60 that may be carried out by one or more processors when the one or more processors are executing instructions stored on a non-transient, computer-readable storage medium. The one or more processors may be part of the controllers 20, for example. The one or more processors are caused to learn over time improved configuration settings for surveillance systems at each of a plurality of remote sites that improve detection of alarm conditions by the surveillance system at the respective remote site, as indicated at block 62. Supervised learning techniques may be used to learn over time improved configuration settings for surveillance systems at each of a plurality of remote sites. For example, security operators for a particular remote site may routinely dismiss certain alarms, indicating that such alarms are not important at the particular remote site. Alternatively, security operators may manually initiate alarms, indicating that the surveillance system missed certain alarm event. Such supervised learning techniques may be used to learn over time improved configuration settings for the surveillance system at the particular remote site.

The one or more processors are caused to receive the improved configuration settings from each of the plurality of remote sites, as indicated at block 64. The one or more processors are caused to generate a learned set of configuration settings based at least in part on the improved configuration settings received from each of the plurality of remote sites, as indicated at block 66. The one or more processors are caused to update the one or more configuration settings of the surveillance systems at each of the plurality of remote sites with one or more of configuration settings of the learned set of configuration settings, resulting in respective updated configuration settings, as indicated at block 68. The one or more processors are caused to detect alarm conditions via the surveillance system at each of the remote sites using the respective updated configuration settings, as indicated at block 70.

In some cases, the one or more processors may be caused to receive approval from a facility manager at each of the plurality of remote sites before updating the one or more configuration settings of the surveillance system at the respective remote site, as indicated at block 72. In some cases, each of the plurality of remote sites may be classified into one of a plurality of remote site categories. The one or more processors may be caused to generate a learned set of configuration settings for each of the remote site categories based at least in part on the improved configuration settings received from each of the plurality of remote sites that are classified in the respective remote site category, as indicated at block 74.

Continuing on Figure 4B, the one or more processors may be caused to update the one or more configuration settings of the surveillance systems of each of the remote sites with one or more of configuration settings of the learned set of configuration settings that correspond to the respective remote site category, as indicated at block 76. The one or more processors may be caused to identify the remote site category of each of the plurality of remote sites based on input data received from an installer of the surveillance systems of each of the plurality of remote sites, as indicated at block 78. The one or more processors may be caused to customize one or more configuration settings of the surveillance systems of the plurality of remote sites based on the corresponding remote site category, as indicated at block 80.

Those skilled in the art will recognize that the present disclosure may be manifested in a variety of forms other than the specific embodiments described and contemplated herein. Accordingly, departure in form and detail may be made without departing from the scope and spirit of the present disclosure as described in the appended claims.

## Claims

1. A system comprising:
a cloud server;
a plurality of remote sites each operatively coupled to the cloud server, wherein each of the plurality of remote sites includes a surveillance system that includes a plurality of video cameras, wherein each of the surveillance systems include:
a plurality of configuration settings that configure the surveillance system to detect alarm conditions at the respective remote site, wherein the plurality of configuration settings include one or more video analytics configuration settings; and
one or more controllers configured to learn over time improved configuration settings for the surveillance system that improve detection of alarm conditions at the respective remote site;
wherein the cloud server is configured to:
receive the improved configuration settings from each of the plurality of remote sites;
generate a learned set of configuration settings based at least in part on the improved configuration settings received from each of two or more of the plurality of remote sites; and
provide the learned set of configuration settings to each of one or more of the plurality of remote sites to configure the surveillance system at each of the one or more remote sites to improve detection of alarm conditions at each of the one or more remote sites.

2. The system of claim 1, wherein the learned set of configuration settings are provided as one or more options to a respective facility manager of each of the one or more of the remote sites for approval, and wherein only those options that are approved by the respective facility manager are implemented at the respective remote site.

3. The system of claim 2, wherein the one or more options include one or more recommended configuration setting changes to help improve detection of alarm conditions at the respective remote site.

4. The system of any of claims 1-3, wherein each of the plurality of remote sites are classified in a common remote site category of a plurality of remote site categories, and the plurality of configuration settings that configure the surveillance system of each of the plurality of remote sites are customized to the respective remote site category.

5. The system of claim 4, wherein the plurality of remote site categories comprise one or more of a school category, a retail business category, a warehouse category a datacenter category and a commercial outlet category.

6. The system of claim 5, wherein the cloud server is configured to:
identify the remote site category of each of the plurality of remote sites based on input data received from an installer of the surveillance systems of each of the plurality of remote sites; and
customize one or more configuration settings of the surveillance systems of the plurality of remote sites based on the respective remote site category.

7. The system of any of claims 1-6, wherein the plurality of configuration settings identify one or more video analytics algorithms to run on a video stream produced by one or more of the plurality of video cameras of the surveillance system of the respective remote site.

8. The system of claim 7, wherein each of the one or more video analytics algorithms are configured to perform one or more of motion detection, facial recognition, crowd detection, riot detection, running detection, loitering detection, fighting detection, behavior detection, and unattended object detection.

9. The system of any of claims 1-8, wherein the plurality of configuration settings are configured to identify one or more camera settings for one or more of the plurality of video cameras of the respective surveillance system.

10. The system of claim 9, wherein the one or more camera settings include one or more of a video camera resolution, a video camera frame rate, and a video camera bitrate.

11. A method for improving detection of alarm conditions by a surveillance system of a facility at a designated remote site, the surveillance system at the designated remote site including a plurality of configuration settings, the method comprising:
each of a plurality of remote sites learning over time improved configuration settings that improve detection of alarm conditions by the surveillance system at the respective remote site;
a cloud server receiving the improved configuration settings from each of the plurality of remote sites;
the cloud server generating a learned set of configuration settings based at least in part on the improved configuration settings received from each of the plurality of remote sites;
the cloud server updating the plurality of configuration settings of the surveillance system of the designated remote site with one or more of configuration settings of the learned set of configuration settings, resulting in updated configuration settings; and
the surveillance system of the designated remote site detecting alarm conditions using the updated configuration settings.

12. The method of claim 11, wherein each of the plurality of remote sites is classified into one of a plurality of remote site categories including the designated remote site, wherein:
the cloud server generating a learned set of configuration settings for each of the remote site categories based at least in part on the improved configuration settings received from each of the plurality of remote sites that are classified in the respective remote site category; and
the cloud server updating the plurality of configuration settings of the surveillance systems of each of the remote sites with one or more of configuration settings of the learned set of configuration settings that correspond to the respective remote site category.

13. The method of claim 12, comprising:
customizing one or more configuration settings of the surveillance system of each of the plurality of remote sites based on input data received from an installer of the surveillance systems of each of the plurality of remote sites.

14. The method of claim 12, wherein the plurality of remote site categories comprise one or more of a school category, a retail business category, a warehouse category a datacenter category and a commercial outlet category.

15. A non-transitory computer readable medium storing instructions that when executed by one or more processors causes the one or more processors to:
learn over time improved configuration settings for surveillance systems at each of a plurality of remote sites that improve detection of alarm conditions by the surveillance system at the respective remote site;
receive the improved configuration settings from each of the plurality of remote sites;
generate a learned set of configuration settings based at least in part on the improved configuration settings received from each of the plurality of remote sites;
update the one or more configuration settings of the surveillance systems at each of the plurality of remote sites with one or more of configuration settings of the learned set of configuration settings, resulting in respective updated configuration settings; and
detect alarm conditions via the surveillance system at each of the remote sites using the respective updated configuration settings.
